# EUROPEAN PATENT APPLICATION

(11) **EP 1 959 112 A1**
(43) Date of publication of application: **20.08.2008**
(21) Application number: 07102584.5
(22) Date of filing: 16.02.2007
(51) Int. Cl.: F02B 75/04

(54) **A reciprocating piston mechanism, a method of assembling this, and an internal combustion engine**

(71) Applicant: Gomecsys B.V., 1411 AR Naarden (NL)
(72) Inventor: De Gooijer, Lambertus, Hendrik, 1412 ND, Naarden (NL)
(74) Representative: Metman, Karel Johannes

(57) **Abstract**

A reciprocating piston mechanism (2) is provided with a crankshaft (3) which is rotatably connected to a crankcase (5) and includes at least a crankpin (7), a connecting rod including a big end and a small end, a piston which is rotatably connected to the small end, and a crank member (13) which is rotatably mounted on the crankpin (7). The crank member (13) comprises at least a bearing portion (14) which is eccentrically disposed with respect to the crankpin (7) and has an outer circumferential wall (15) which bears the big end of the connecting rod such that the connecting rod is rotatably mounted on the crank member (13) via the big end. The reciprocating piston mechanism (2) is provided with a rotary mechanism for rotating the crank member (13) with respect to the crankpin (7). The crank member (13) is made of at least two parts which are fixed to each other around the crankpin (7). An internal combustion engine may be provided with the reciprocating piston mechanism (2).

## Description

The present invention relates to a reciprocating piston mechanism, provided with a crankshaft being rotatably connected to a crankcase and including at least a crankpin, a connecting rod including a big end and a small end, a piston being rotatably connected to the small end, and a crank member being rotatably mounted on the crankpin, the crank member comprising at least a bearing portion which is eccentrically disposed with respect to the crankpin and has an outer circumferential wall which bears the big end of the connecting rod such that the connecting rod is rotatably mounted on the crank member via the big end, wherein the reciprocating piston mechanism is provided with a rotary mechanism for rotating the crank member with respect to the crankpin.

Such a reciprocating piston mechanism is known from EP 1 080 320 B1. The prior art piston mechanism has a crank-connecting rod mechanism which is, for example, typically suitable for optimization of the operation of an internal combustion engine. Such engine is assembled by putting the crankpin of one part of the crankshaft through an axial hole of the crank member and then fixing the crankpin to the other part of the crankshaft, for example, by pressing. This may lead to a relatively weak crankshaft.

The present invention aims to provide a more robust reciprocating piston mechanism.

For this purpose the crank member is made of at least two parts which are fixed to each other around the crankpin. Due to these features the crankshaft can be made of one piece such as in the case of conventional reciprocating piston mechanisms. This results in a more rigid and also less expensive crankshaft. Furthermore, the reciprocating piston mechanism according to the invention provides the opportunity to simplify the assembly method thereof, because it is no longer necessary to fix separate crankshaft parts to each other, which required very accurate tools, and high power in the case of applying a pressing technique. Besides, time needed for assembly is significantly reduced and the reciprocating piston mechanism according to the invention is better suited for mass production.

The rotary mechanism may be adapted such that the crank member is movably engaged with the crankcase and rotates with respect to the crankpin upon rotation of the crankshaft. This means that the rotation of the crank member is a controlled movement which is directly related to the rotation of the crankshaft.

In a practical embodiment the rotary mechanism comprises a gear which is fixed to the crank member and an internal ring gear which is connected to the crankcase and with which the gear meshes. In this case the crank member is forced to rotate in opposite direction with respect to the crankshaft. The diameter of the gear and the internal ring gear define the ratio between the rotational speed of the crank member and that of the crankshaft. It is noted that the internal ring gear may also be rotatably connected to the crankcase such as described in the above-mentioned patent EP 1 080 320 B1.

The crank member may comprise a gear support to which the gear is fixed. This provides the possibility to fix the gear separately to the crank member, which facilitates the assembly of the mechanism since the gear does not form an obstruction when mounting the crank member on the crankpin during assembly of the reciprocating piston mechanism. Furthermore, this embodiment provides the opportunity to apply different gear diameters without the necessity of applying a different crank member.

The crank member may be a sleeve which is disposed concentrically with respect to the crankpin, wherein the crank member parts are substantially two mutually fitting halves separated along a longitudinal direction of the sleeve. This embodiment has the advantage that it is relatively easy to manufacture as well as to assemble.

Preferably, the gear support is mounted on the sleeve since this makes the crank member a compact unit.

In an advantageous embodiment the gear has a central opening which is adapted such that the gear is movable around the crankshaft and the crank member in axial direction of the crankshaft before assembly so as to enable the gear to be fitted to the gear support upon assembly. Due to these features the gear can be made of a single part which can be fitted relatively easy to the crank member.

Each of the parts of the crank member may comprise fitting means for fitting both parts to each other upon assembly. This facilitates the assembling operation of the parts and provides the possibility of accurate fitting of the parts before fixing them to each other.

Each half may have a contact surface facing the contact surface of the other half when assembled, which contact surface is provided with at least a projection which fits into a recess of the contact surface of the other part. This embodiment has the advantage that it is both simply to manufacture and to assemble.

It is also possible that each contact surface is provided with at least a recess in which a fitting element fits, hence forming said projection. This provides the opportunity to machine both parts in the same way by providing them with recesses and insert a fitting element in one of two recesses facing each other in assembled condition.

The crank member may comprise at least an oil transfer channel for transporting oil from the crankpin to the outer circumferential wall of the crank member which bears the big end. This means that oil can be transferred via the crankshaft to the crank member such as in conventional piston engines directly to the big end bearing, whereas in this embodiment a bearing at the big end can be supplied with oil via the oil transfer channel of the crank member.

Preferably, the oil transfer channel communicates via an oil chamber with an oil channel disposed in the crankpin, which oil chamber is located between the crank member and the crankpin and spaced from the bearing portion in axial direction of the crankpin. This has the advantage that at the bearing portion the supporting surface between the crankpin and the crank member is not reduced due to the presence of an oil chamber between the crankpin and the crank member for continuous oil transfer from the crankpin to the outer wall of the bearing portion. It is noted that instead of a direct contact between the crankpin and the crank member a bearing element may be placed between the crankpin and the crank member. However, this does not change the advantage of locating the oil chamber such as defined above.

In a practical embodiment the crank member is provided with at least two bearing portions for bearing at least two connecting rods per crank member. In this case the crank member is used efficiently. It also means that a crankshaft having one crankpin per two cylinders, can be applied, hence reducing manufacturing costs.

Preferably, the bearing portions are spaced from each other in axial direction of the crank member, and the gear support is provided between the bearing portions, because this embodiment appears to result in a compact construction.

The crankshaft may be provided with counterweights which are separately mounted on the crankshaft. The advantage is that the counterweights can be fixed to the crankshaft after mounting the gear on the crank member. The crankshaft without counterweights has a smaller projected outer circumference in axial direction, hence creating more space for moving the gear about the crankshaft in axial direction thereof upon assembly.

The invention is also related to an internal combustion engine which comprises the above-mentioned reciprocating piston mechanism. This engine provides, for example, the opportunity to adjust the compression end point and expansion end point of the stroke of the piston.

The invention is also related to a method of assembling the reciprocating piston mechanism. This method may comprise the steps: providing the crankshaft; fitting the crank member parts to each other around the crankpin; putting the gear, which includes a central opening, around the crankshaft in axial direction thereof; fitting the gear to the crank member and fixing it thereto.

The method may also comprise the step of fixing at least a counterweight to the crankshaft. The advantage is that before this step the projected circumference of the crankshaft in axial direction thereof is relatively small, hence creating more room to carry out the step of putting the gear around the crankshaft in axial direction thereof.

The invention will hereafter be elucidated with reference to the drawings showing embodiments of the invention by way of example.
Fig. 1 is a schematic perspective cut-away view of an internal combustion engine which is provided with an embodiment of a reciprocating piston mechanism according to the invention.
Fig. 2 is a perspective detailed and partly exploded view of a part of the reciprocating piston mechanism of the engine of Fig. 1 on a larger scale.
Fig. 3 is an exploded view of a part of an alternative crank member.
Fig. 4 is a perspective view of the embodiment of Fig. 3, showing it in assembled condition.
Fig. 5 is a perspective sectional view of a part of the reciprocating piston mechanism of Fig. 2 on a larger scale.
Fig. 6 is a perspective detailed view of a part of the engine of Fig. 1.

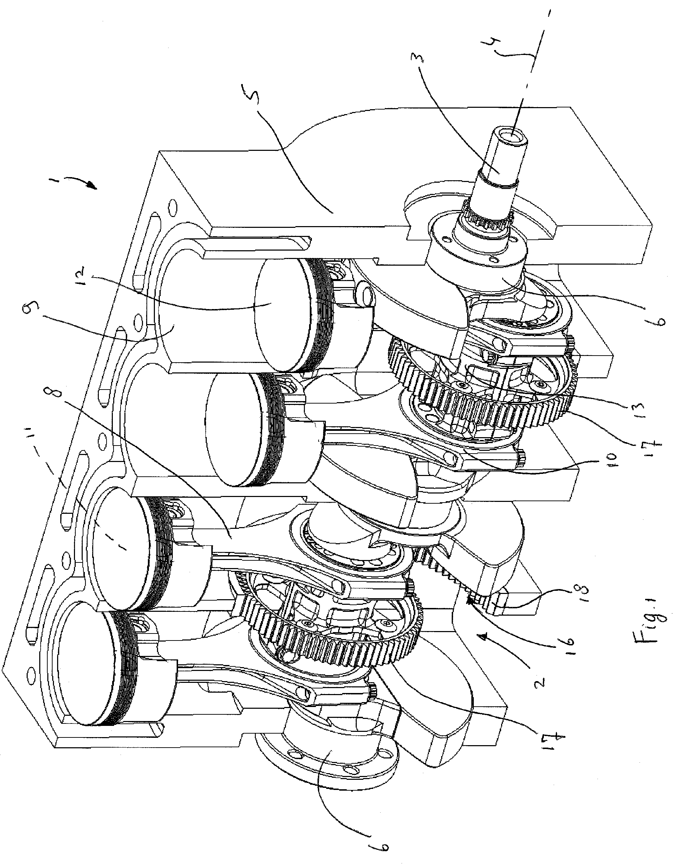

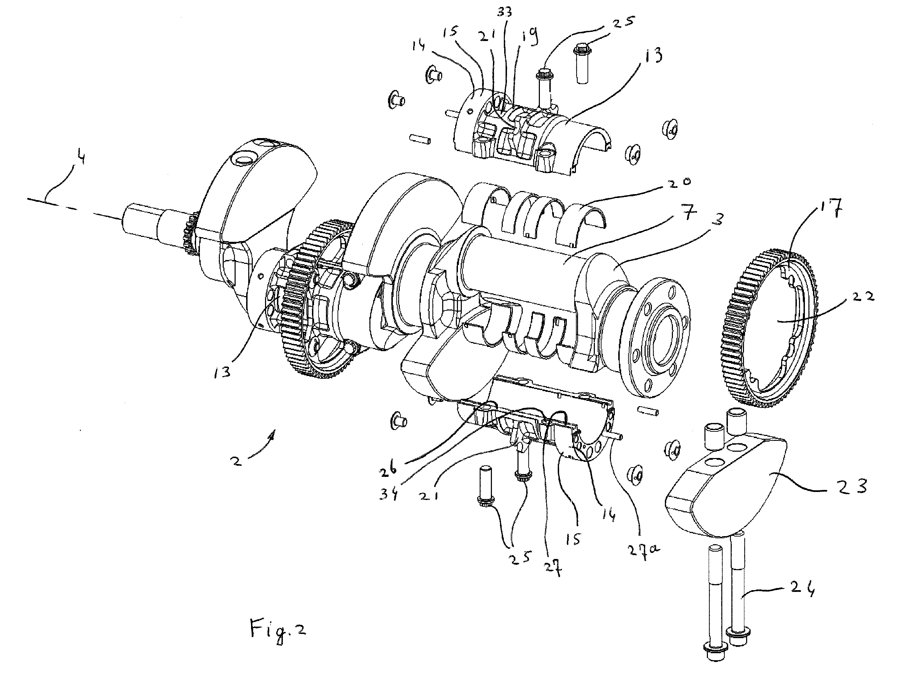

Fig. 1 shows a perspective cut-away view of an internal combustion engine 1, which is in this case a four-cylinder, four-stroke, in-line engine. The engine 1 comprises an embodiment of a reciprocating piston mechanism 2 according to the invention. The reciprocating piston mechanism 2 is provided with a crankshaft 3, which looks like that of a conventional piston engine and is made of one piece. The crankshaft 3 has an axis of rotation 4 and is rotatably connected to a crankcase 5 via crankshaft bearings 6. The embodiment such as shown in Fig. 1 comprises two crankpins 7, see Fig. 2. Each crankpin 7 is connected to two connecting rods 8 of two adjacent cylinders 9. Each connecting rod 8 has a big end 10 and a small end 11. The small end 11 is rotatably connected to a corresponding piston 12 via a piston pin (not shown). In each cylinder 9 the piston 12 moves upwards and downwards within the cylinder 9 when the engine 1 is running.

The embodiment of the reciprocating piston mechanism 2 comprises a crank member 13 which is rotatably mounted on the crankpin 7. The crank member 13 comprises two bearing portions 14 which are each eccentrically disposed with respect to the crankpin 7 and have outer circumferential walls 15 which bear the big ends 10 of the corresponding connecting rods 8. This means that the connecting rods 8 are rotatably mounted on the crank member 13 via the big ends 10. Between the connecting rod 8 at the big end 10 and the bearing portion 14 a bearing element such as a bearing bush may be present.

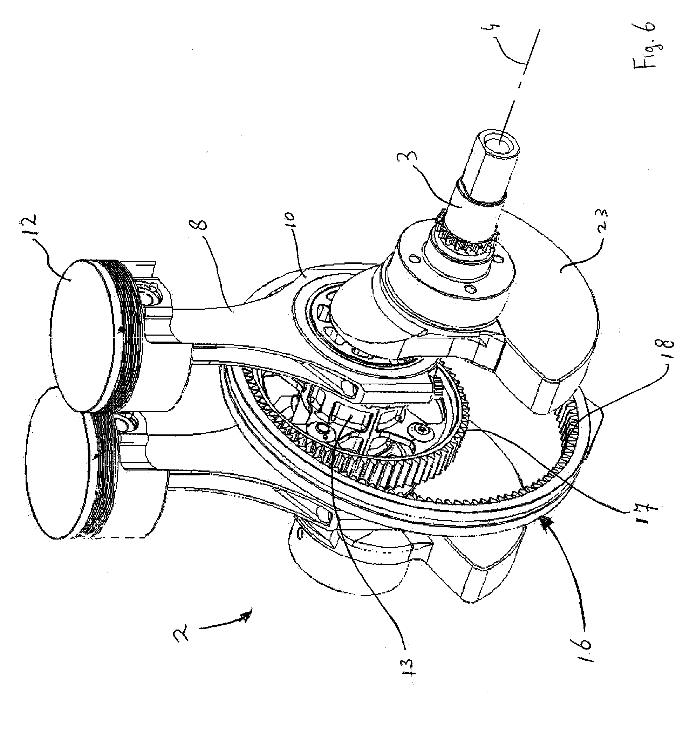

The reciprocating piston mechanism 2 is also provided with a rotary mechanism 16. This mechanism is adapted such that the crank member 13 is rotated with respect to the crankpin 7 upon rotation of the crankshaft 3. In this embodiment the rotary mechanism 16 comprises a gear 17 which is fixed to the crank member 13 and an internal ring gear 18 which is connected to the crankcase 5 and with which the gear 17 meshes, see also Fig. 6. The internal ring gear 18 is concentrically located with respect to the axis of rotation 4 of the crankshaft 3. It is also possible that the internal ring gear 18 is turnable around the axis of rotation 4 so as to achieve advantageous effects of the movement of the piston 12 within the cylinder 9 (not shown). This is described in detail in EP 1 080 320 B1.

Fig. 2 shows a part of the embodiment of the reciprocating piston mechanism 2 in more detail. The left part of Fig. 2 shows a part of the mechanism 2 in assembled condition and the right part in disassembled condition. In this embodiment the crank member 13 is a sleeve 19 which is disposed concentrically with respect to the crankpin 7. The crank member 13 is made of two parts which are fixed to each other around the crankpin 7. Both parts of the crank member 13 are mutually fitting halves, which are separated along a longitudinal direction of the crank member 13.

The bearing portions 14 are spaced from each other in axial direction of the crank member 13. In this embodiment the bearing portions 14 are arranged at the axial ends of the crank member 13.

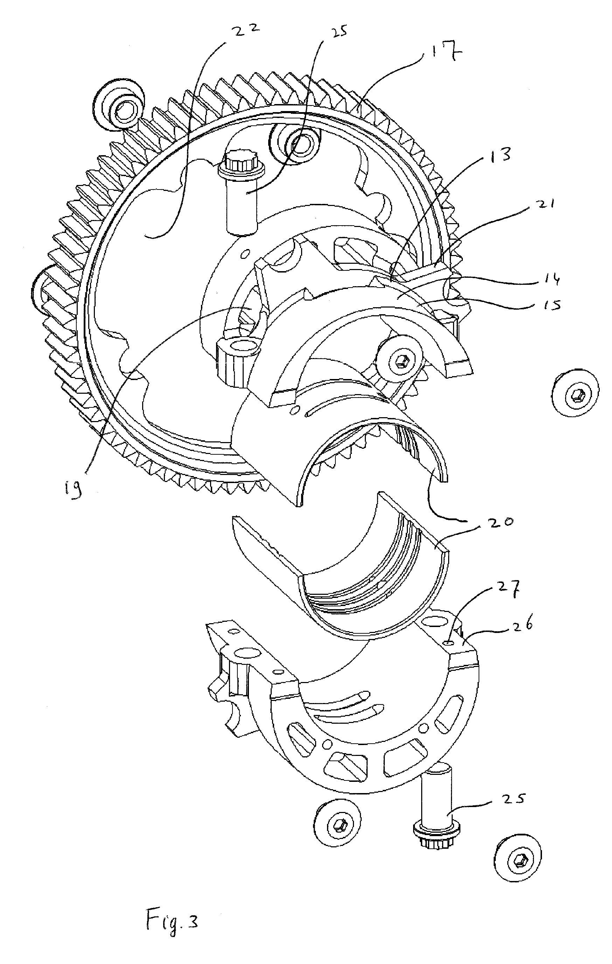

The crank member 13 is mounted on the crankpin 7 via a crank member bearing 20. In the embodiment of Fig. 2 the crank member bearing 20 comprises four pairs of bearing elements located in parallel to each other in longitudinal direction of the crank member 13. Alternatively, these may be combined to a single pair of bearing elements, such as shown in Fig. 3.

In the embodiment of Fig. 2 both halves of the crank member 13 are fixed together by fixing means, which are bolts 25 in this case. Of course, numerous other fixing means are conceivable. As can be seen in Fig. 2 the orientation of the bolt heads of the bolts near one of the two bearing portions 14 is opposite to that of the bolts near the other bearing portion 14 on the same crank member 13 so as to achieve optimal balancing properties of the reciprocating piston mechanism 2.

Each half has a contact surface 26 facing the contact surface 26 of the other half when assembled. The contact surface 26 is provided with at least a projection (not shown) which fits into a recess of the contact surface 26 of the other part. Alternatively, each contact surface 26 is provided with a recess 27 (see Fig. 2 and 3) in which a fitting element 27a fits (only shown in Fig. 3), hence forming said projection.

The recesses 27, such as shown in Fig. 2, can be made by drilling and honing a hole into the crank member 13 in axial direction thereof at the contact surface 26 when both halves are joint. This hole extends from an axial outer wall of the crank member 13 to a through-hole 34, through which bolts 25 are screwed upon assembly of the reciprocating piston mechanism 2. This way of drilling the hole up to the through-hole 34 makes the process of honing simpler. With the created longitudinal recesses 27 in combination with the cylindrical fitting elements 27a a reliable and accurate fitting means is achieved. Since the fitting elements 27a extend in axial direction of the crank member 13 over the width of the bearing portion 14 in axial direction a rigid construction is achieved at the bearing portion 14 after assembly. As a consequence, displacement of the halves of the crank member 13 with respect to each other, at least at the bearing portion 14, is minimized during engine running.

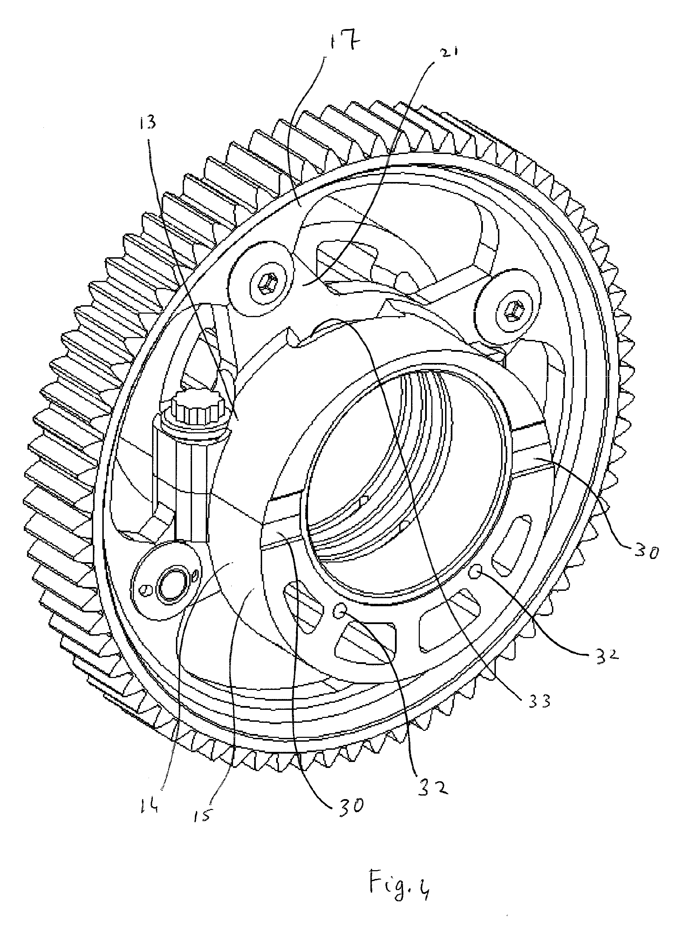

Fig. 3 and 4 show in more detail how the gear 17 is fixed to the crank member 13. The crank member 13 comprises a gear support 21 which is composed of projections in radial outward direction of the crank member 13 to which projections the gear 17 is fixed. The gear support 21 is provided between the bearing portions 14. The projections of the gear support 21 fit accurately to projections on the gear 17 which are directed to a centre line of the gear 17. The gear 17 and gear support 21 are fixed to each other by fixing elements which fit narrowly through holes between the projections of the gear 17 and gear support 21, which holes are formed when the gear 17 is fit onto the gear support 21. Of course, alternative ways of fitting and fixing the gear 17 to the gear support 21 are conceivable.

The crank member 13 such as shown in Fig. 3 is an alternative one. The length of the portion of the sleeve 19 between the bearing portions 14 is shorter than in the embodiment of Fig. 2. The parts of the crank member 13 are fixed to each other by two bolts 25 in the middle of crank member 13 as seen in axial direction thereof. The alternative embodiment of the crank member 13 is typically suitable for a V-engine, in which adjacent cylinders 9 are located close to each other in axial direction of the crankshaft 3.

The crank member 13 may be made of two similar halves. This reduces manufacturing costs considerably. In that case the halves may be rotational symmetrical about a line perpendicular to their longitudinal axis and perpendicular to a contact plane between both halves. Due to these properties the eccentrically located bearing portions 14 of a crank member 13 will be in counter phase.

The gear 17 has a central opening 22 which is adapted such that the gear 17 is movable around the crankshaft 3 and the crank member 13 in axial direction of the crankshaft 3 before it is assembled. This means that the gear 17 can be made of one piece which can be fitted as a single unit to the gear support 21 upon assembly.

The crankshaft 3 is provided with counterweights 23 which are separately mounted on the crankshaft 3 by fixing means, such as bolts 24 or the like, see Fig. 2. This has the advantage that upon assembly the counterweights 23 can be assembled after fixing the gear 17 onto the crank member 13 such that during the fitting operation of the gear 17 there is sufficient room to move the gear 17 to the gear support 21 without being obstructed by counterweights.

In the embodiment of Fig. 1 the ignition sequence of the cylinders is different from that in conventional four-cylinder in-line engines, because of the shape of the crankshaft 3 which has only two crankpins 7. However, the crank member 13 is adapted such that one of a pair of cylinders 9 associated with one crankpin 7 is in a compression stroke, whereas the other one is in an exhaust stroke, in the case of a four-stroke engine. This is achieved by positioning the eccentrical bearing portions 14 in counter phase with respect to each other on the crank member 13.

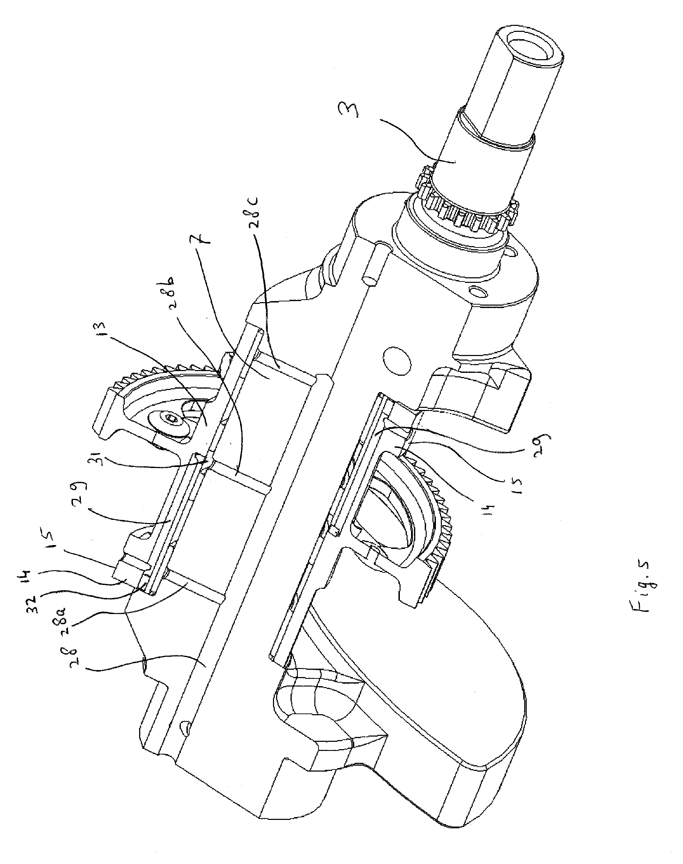

Fig. 5 shows a sectional view of the crankshaft 3. It can be seen that an oil channel 28 extends through the crankpin 7 in axial direction thereof. The oil channel 28 splits up into three transverse channels 28a, 28b and 28c, which transverse channels 28a,b,c each extend to a circumferential wall of the crankpin 7. The crank member 13 comprises an oil transfer channel 29 for transporting oil coming from the crankpin 7 to the outer circumferential wall 15 of the crank member 13 which bears the big end 10. Fig. 5 further shows that the transverse channel 28b communicates with an oil chamber 31 which is located circumferentially with respect to the crankpin 7. Because of this configuration, during engine running, oil can be continuously supplied from the oil channel 28 to the oil chamber 31 and from there via channel 29 to the circumferential wall 15 of the bearing portion 14. This configuration has the advantage that it is not necessary, for example, to have a circumferential recess in the circumferential wall of the crankpin 7 or of a bearing element between the crankpin 7 and the crank member 13 at the bearing portion 14 in order to form a circumferential oil chamber around the crankpin 7. Such a recess would lead to a smaller bearing surface between the crankpin 7 and the bearing element of the crank member 13 at the bearing portion 14.

The channel 29 is provided with a plug 32 for closing-off the channel 29.

In the embodiment shown in Fig. 4 the crank member is provided with recesses 30 for oil flow control. The through-holes 33 in the circumferential wall of the crank member 13 also serve for oil flow control so as to obtain appropriate oil flow rates along the engine parts.

From the foregoing, it will be clear that the invention provides a robust reciprocating piston mechanism 2 which is relatively simple to assemble.

The invention is not limited to the embodiment shown in the drawings and described hereinbefore, which may be varied in different manners within the scope of the claims and their technical equivalents. For example, the reciprocating piston mechanism may be used for other piston engines such as a piston compressor.

## Claims

1. A reciprocating piston mechanism (2), provided with a crankshaft (3) being rotatably connected to a crankcase (5) and including at least a crankpin (7), a connecting rod (8) including a big end (10) and a small end (11), a piston (12) being rotatably connected to the small end (11), and a crank member (13) being rotatably mounted on the crankpin (7), the crank member (13) comprising at least a bearing portion (14) which is eccentrically disposed with respect to the crankpin (7) and has an outer circumferential wall (15) which bears the big end (10) of the connecting rod (8) such that the connecting rod (8) is rotatably mounted on the crank member (13) via the big end (10), wherein the reciprocating piston mechanism (2) is provided with a rotary mechanism (16) for rotating the crank member (13) with respect to the crankpin (7), **characterized in that** the crank member (13) is made of at least two parts which are fixed to each other around the crankpin (7).

2. A reciprocating piston mechanism (2) according to claim 1, wherein the rotary mechanism (16) is adapted such that the crank member (13) is movably engaged with the crankcase (5) and rotates with respect to the crankpin (7) upon rotation of the crankshaft (3).

3. A reciprocating piston mechanism (2) according to claim 1 or 2, wherein the rotary mechanism (16) comprises a gear (17) which is fixed to the crank member (13) and an internal ring gear (18) which is connected to the crankcase (5) and with which the gear (17) meshes.

4. A reciprocating piston mechanism (2) according to claim 3, wherein the crank member (13) comprises a gear support (21) to which the gear (17) is fixed by fixing means.

5. A reciprocating piston mechanism (2) according to one of the preceding claims, wherein the crank member (13) is a sleeve (19) which is disposed concentrically with respect to the crankpin (7), wherein the crank member parts are substantially two mutually fitting halves separated along a longitudinal direction of the sleeve (19).

6. A reciprocating piston mechanism (2) according to claims 4 and 5, wherein the gear support (21) is mounted on the sleeve (19).

7. A reciprocating piston mechanism (2) according to claims 4 or 6, wherein the gear (17) has a central opening (22) which is adapted such that the gear (17) is movable around the crankshaft (3) and the crank member (13) in axial direction of the crankshaft (3) before assembly so as to enable the gear (17) to be fitted to the gear support (21) upon assembly.

8. A reciprocating piston mechanism (2) according to one of the preceding claims, wherein each of the parts of the crank member (13) comprises fitting means for fitting both parts to each other upon assembly.

9. A reciprocating piston mechanism (2) according to claims 5 and 8, wherein each half has a contact surface (26) facing the contact surface (26) of the other half when assembled, and the fitting means comprise at least a projection on the contact surface and at least a recess (27) in the contact surface (26) of the other part, which projection and recess fit into each other.

10. A reciprocating piston mechanism (2) according to claim 9, wherein each contact surface (26) is provided with at least a recess (27) in which a fitting element (27a) fits, hence forming said projection.

11. A reciprocating piston mechanism (2) according to one of the preceding claims, wherein the crank member (13) comprises at least an oil transfer channel (29) for transporting oil from the crankpin (7) to the outer circumferential wall (15) of the crank member (13) which bears the big end (10).

12. A reciprocating piston mechanism (2) according to claim 11, wherein the oil transfer channel (29) communicates via an oil chamber (31) with an oil channel (28b) disposed in the crankpin (7), which oil chamber (31) is located between the crank member (13) and the crankpin (7) and spaced from the bearing portion (14) in axial direction of the crankpin (7).

13. A reciprocating piston mechanism (2) according to one of the preceding claims, wherein the crank member (13) is provided with at least two bearing portions (14) for bearing at least two connecting rods per crank member (13).

14. A reciprocating piston mechanism (2) according to claims 4 and 13, wherein the bearing portions (14) are spaced from each other in axial direction of the crank member (13), and the gear support (21) is provided between the bearing portions (14).

15. A reciprocating piston mechanism (2) according to one of the preceding claims, wherein the crankshaft (3) is provided with counterweights (23) which are separately mounted on the crankshaft (3).

16. An internal combustion engine (1) which comprises the reciprocating piston mechanism (2) according to one of the claims 1-15.

17. Method of assembling a reciprocating piston mechanism (2) according to one of the claims 4-15, comprising the steps:
- providing the crankshaft (3)
- fitting the crank member (13) parts to each other around the crankpin (7)
- putting the gear (17), which includes a central opening (22), around the crankshaft (3) in axial direction thereof
- fitting the gear (17) to the crank member (13) and fixing it thereto.

18. Method of assembling according to claim 17, wherein, at least a counterweight (23) is fixed to the crankshaft (3).
